(19) **Europäisches Patentamt**
**European Patent Office**
**Office européen des brevets**

(11) **EP 1 771 775 B1**

(12) **EUROPÄISCHE PATENTSCHRIFT**

(45) Veröffentlichungstag und Bekanntmachung des Hinweises auf die Patenterteilung:
**03.12.2008 Patentblatt 2008/49**

(21) Anmeldenummer: **05770007.2**

(22) Anmeldetag: **26.07.2005**

(51) Int Cl.:
***G05B 9/02*** *(2006.01)*

(86) Internationale Anmeldenummer:
**PCT/DE2005/001314**

(87) Internationale Veröffentlichungsnummer:
**WO 2006/012854 (09.02.2006 Gazette 2006/06)**

(54) **VERFAHREN ZUR FEHLERERKENNUNG VON SENSORWERTEN UND FEHLERERKENNUNGS-EINRICHTUNG**

METHOD FOR DETECTING ERRORS IN SENSOR VALUES AND ERROR DETECTION DEVICE

PROCEDE DE DETECTION D'ERREUR SUR DES VALEURS DE CAPTEUR ET DISPOSITIF DE DETECTION D'ERREUR

(84) Benannte Vertragsstaaten:
**DE FR GB IT**

(30) Priorität: **30.07.2004 DE 102004037352**

(43) Veröffentlichungstag der Anmeldung:
**11.04.2007 Patentblatt 2007/15**

(73) Patentinhaber: **EADS Deutschland GmbH**
**85521 Ottobrunn (DE)**

(72) Erfinder:
• **LOHMILLER, Winfried**
**81373 München (DE)**
• **ZECHA, Christian**
**82194 Gröbenzell (DE)**

(56) Entgegenhaltungen:
**WO-A-01/48571** **US-A- 5 680 409**

**Beschreibung**

Die Erfindung betrifft ein Verfahren zur Fehlererkennung von Sensorwerten und eine Fehlererkennungs-Einrichtung.

Die Erfindung betrifft insbesondere ein Verfahren zur Fehlererkennung für ein Geländedatenbank-gestütztes Navigationsverfahren für Flugzeuge.

Bei aus dem allgemeinen Stand der Technik bekannten Verfahren zur Fehlererkennung von Sensorwerten in dynamischen Systemen wird der Vergleich von similar oder dissimilar ermittelten Sensorwerten zugrundegelegt. Dabei wird eine funktionale oder gerätetechnische Redundanz verwendet.

Der Oberbegriff der Ansprüche 1 und 2 wird in US 5680409 veröffentlicht.

Es ist die Aufgabe der Erfindung, ein Verfahren bereit zu stellen, mit dem eine Sensorwert-Güte auf geeignete Weise analytisch ermittelbar ist.

Diese Aufgabe wird mit den Merkmalen der unabhängigen Patentansprüche gelöst. Weitere Ausführungsformen sind in den auf diese rückbezogenen Unteransprüchen angegeben.

Erfindungsgemäß ist ein zur Implementierung in eine Datenverarbeitungseinrichtung vorgesehenes Verfahren zur Überwachung einer zulässigen Integrität einer Messgröße eines dynamischen Systems mit den folgenden Schritten vorgesehen:

- Ermittlung zumindest einer Mess-Reihe mit jeweils einer Anzahl von Messungen mittels zumindest einer Sensor-Einrichtung mit jeweils einer vorgegebenen Messgenauigkeit und einer auf diese bezogenen, vorgegeben en tatsächlichen Sensor-Integrität,

- Ermittlung einer Anzahl von Messfehlern in Abhängigkeit der tatsächlichen Sensor- Integritäten, in Abhängigkeit von der Anzahl von Messungen und in Abhängigkeit von einer Mindest-Integrität,

- Ermittlung für jede Messung der Mess-Reihe einen Bereich $X_k$ als Mess-Ungenauigkeit und Ermittlung ausgehend von den Mess-Ungenauigkeitsbereichen $X_1$ , ..., $X_n$ und der Anzahl m von Messfehlern eines Genauigkeitsbereichs $X_0$ für die zu ermittelnde Mess-Größe $x_0$, so dass der Genauigkeitsbereichs $X_0$ die wahre Mess-Größe $x_0$ mit der vorgegebenen Mindest-Integrität $\{1 - p_0\}$ enthält,

- Zuordnung des ermittelten Genauigkeitsbereichs zu einem Genauigkeitsmaß

- Vergleich des ermittelten Genauigkeitsmaßes mit einem Schwellwert,

- Ausgabe einer Warnung, sobald ein Sollwert erreicht, unter- oder überschritten ist.

Die Ermittlung der Anzahl von Messfehlern kann insbesondere mittels der Vorschrift

$$\sum_{j=m+1}^{n} \frac{n!}{j!(n-j)!} p^j (1-p)^{n-j} < p_0$$

erfolgen, wobei $\{1- p\} = \{1- p_1\}, ..., \{1- p_n\}$ eine für die Mess-Reihe einheitliche Sensor-Integrität bezeichnet.

Ein Vorteil der Erfindung ist, dass redundante Funktionen oder Geräte oder Komponenten, die zur Gewährleistung einer Mindest-Integrität vorgesehen sind, eingespart werden können.

Insbesondere kann erfindungsgemäß aus entsprechend vielen Messungen, die für sich betrachtet eine verhältnismäßig geringe Integrität haben, ein Messwert mit einer relativ hohen Integrität gebildet werden.

In dem besonderen Anwendungsfall der Positions- und Höhen-Bestimmung für ein Flugzeug kann das erfindungsgemäße Verfahren bzw. die erfindungsgemäße Vorrichtung unter Gewährleistung einer vorgegebenen Mindest-Integrität oder unter Einhaltung eines maximalen Integritäts-Risikos eingesetzt werden. Unter Integritäts-Risiko wird hierbei die Wahrscheinlichkeit für einen in einem System unentdeckten oder ungemeldeten Fehler verstanden. Alternativ könnte das erfindungsgemäße Verfahren bzw. die erfindungsgemäße Vorrichtung unter Erreichung einer vorgegebenen Genauigkeit eine zugehörige Integrität ermitteln.

Im folgenden wird die Erfindung anhand der beiliegenden Figuren beschrieben, die zeigen:

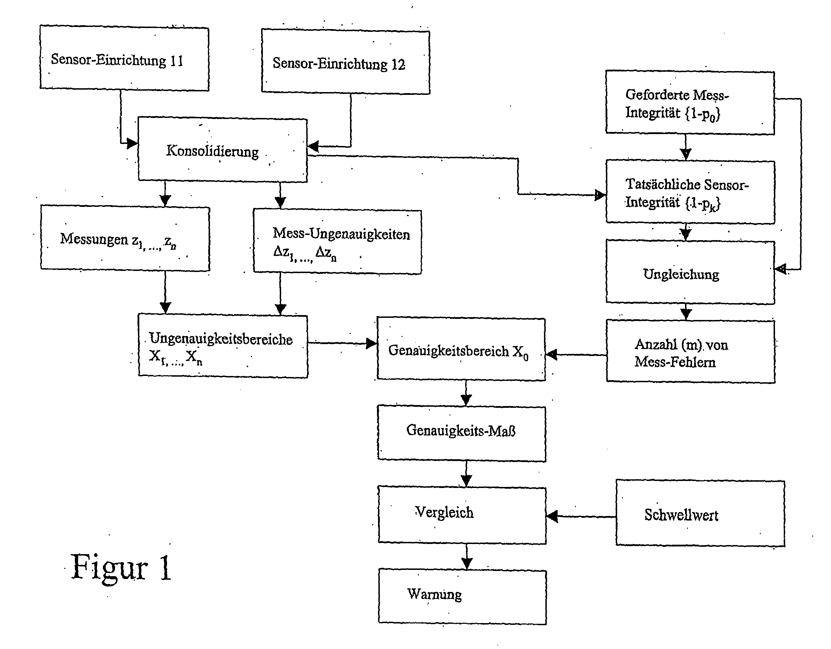

- Figur 1 eine Darstellung von Schritten des erfindungsgemäßen Verfahrens,

- Figur 2 eine schematische Darstellung einer Ausführungsform der erfindungsgemäßen Fehlererkennungs-Einrichtung,

- Figur 3 eine schematische Darstellung einer Ausführungsform der erfindungsgemäßen Fehlererkennungs-Einrichtung zur Anwendung für eine NavigationsEinrichtung für ein Flugzeug,

- Figur 4 für die Anwendung der Erfindung auf ein Navigationsverfahren die schematische Darstellung einer geflogenen Trajektorie über einem Geländeprofil und vergleichsweise dazu eine von einer in dem Flugzeug vorhandene Inertialsensorik gemessene und ermittelte Trajektorie, wobei zusätzlich eine Zeitskala angegeben ist,

- Figur 5 für die Anwendung der Erfindung auf ein Navigationsverfahren nach der Figur 4 eine angenommene Ausgangsposition des Flugzeugs für eine Inertialsensor-Messung und eine von einem Höhenmesser ermittelter Verlauf der Höhe über Grund bezogen auf die genannte Ausgangsposition des Flugzeugs sowie das Profil des wahren Geländes im Be-

**EP 1 771 775 B1**

reich unterhalb der geflogenen Flugbahn, wobei mittels eines grau hinterlegten Bereichs ein Ungenauigkeitsbereich für den ermittelten Verlauf der Höhe über Grund gezeigt ist,

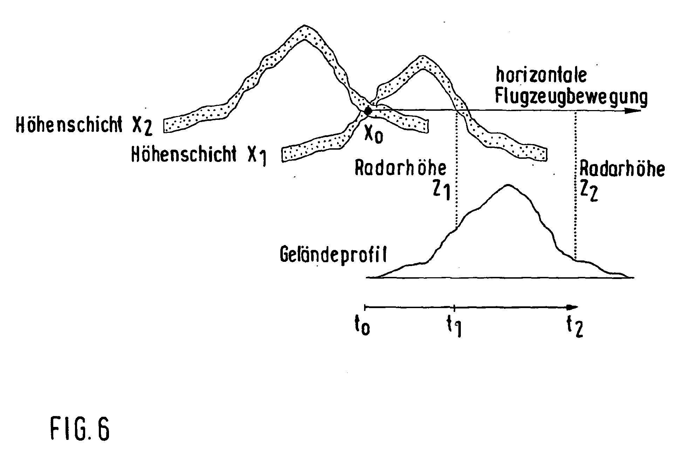

- Figur 6 für die Anwendung der Erfindung auf ein Navigationsverfahren nach der Figur 4 ein Überlappungsbereich zur Veranschaulichung der Ermittlung der Integrität eines Sensorwertes.

Das erfindungsgemäße zur Implementierung in eine Datenverarbeitungseinrichtung vorgesehene Verfahren zur Erkennung des Überschreitens eines vorgegebenen Integritäts-Risikos einer Messgröße $x_0$ eines dynamischen Systems liefert eine momentane oder zeitabhängige Messgröße $x_0$ oder eine Reihe solcher Messgrößen $x_0$ zusammen mit einer ermittelten Genauigkeit bzw. einem ermittelten Genauigkeitsbereich $X_0$ dieser Messgröße $x_0$.

Das erfindungsgemäße Verfahren ist auf Fälle anzuwenden, bei denen eine Anzahl von $n$ Messungen von zumindest einer Sensor-Einrichtung zur Bestimmung einer Messgröße verwendet werden. Der zumindest einen Sensor-Einrichtung wird dabei eine tatsächliche oder für die einzelne Einrichtung spezifizierte oder vermutete oder angenommene Integrität, die im folgenden kurz tatsächliche Integrität genannt wird, zugeordnet. Diese kann insbesondere aus der Sensordaten-Ermittlungsverfahren und/oder der Beschaffenheit des Sensor-Gerätes abgeleitet werden. Für den Fall, dass in dem erfindungsgemäßen Verfahren mehrere Sensor-Einrichtungen zur Bestimmung einer Messgröße angeordnet oder integriert sind, kann jeder Sensor-Einrichtung für sich eine tatsächliche Integrität zugeordnet werden. Aus mehreren tatsächlichen Integritäten kann dann wiederum eine tatsächliche Integrität für die gesamte Sensor-Einrichtung, d.h. für mehrere Sensor-Einrichtungen ermittelt werden. Auch kann eine Sensor-Einrichtung mehrere Sensoren und / oder auch mehrere Datenverarbeitungs-Einrichtungen oder auch zugeordnete Funktionseinheiten oder Geräte, wie z.B. Filter, Beobachter, umfassen. Jedem dieser Sensoren oder Datenverarbeitungs-Einrichtungen kann wiederum eine tatsächliche Integrität zugeordnet werden, um daraus eine tatsächliche Integrität für die Sensor-Einrichtung bilden zu können.

Diese tatsächliche, gegebenenfalls zusammengesetzte Integrität der zumindest einen Sensor-Einrichtung wird in Abhängigkeit von einer vorgegebenen Anzahl n von Messungen und in Abhängigkeit von der Anzahl m anzunehmender Messfehler in eine Beziehung zu einer für den zu ermittelten Sensorwert maßgeblichen geforderten Integrität gesetzt und dabei ermittelt, wie viele Messfehler m höchstens zulässig sind, um die geforderte Integrität zu gewährleisten.

Insbesondere kann erfindungsgemäß vorgesehen sein, die kleinste Zahl $m$, $0 \leq m \leq n$, für die maximale Zahl der zulässigen Messfehler m durch Lösung der Ungleichung

$$\sum_{j=m+1}^{n} \frac{n!}{j!(n-j)!} p^j (1-p)^{n-j} < p_0$$

zu ermitteln. In dieser Ungleichung können auch alternativ andere Größen, d.h. aus den genannten Größen abgeleitete Größen verwendet werden. Z.B. kann statt {m+1} auch der Wert {m} verwendet werden, wenn als maximale Anzahl zulässiger Messfehler die Größe {m-1} angesehen oder verwendet wird. Die Größe {1 - $p_0$} ist eine geforderte Integrität für den zu ermittelnden Messwert oder eine daraus abgel eitete Größe. Dieser Wert kann für ein Flugzeug z.B. $1\text{-}10^{-4}$ pro Flugstunde betragen, was bei der Annahme oder Vorgabe von 100 Messungen pro Flugstunde einer Integrität von $1\text{-}10^{-6}$ pro jeweiligem ermittelten Wert entspricht. Die Größe $p_0$ ist ein erlaubtes Integritäts-Risiko für die Mess-Größe $x_0$. Der Wert $p$ kann als Sensor-Integritäts-Risiko verstanden werden. Die Größe {1 - $p$} ist eine tatsächliche oder vorgegebene oder gemessene Integrität für die einzelne Sensor-Einrichtung und/oder das mit der Sensor-Einrichtung implementierte Verfahren. Diese Integrität wird im folgenden kurz als tatsächliche Integrität bezeichnet. Bei der Verwendung mehrerer Bestandteile innerhalb ei ner Sensor-Einrichtung und/oder bei der Verwendung mehrerer Sensor-Einrichtungen zur Ermittlung eines Messwertes ist {1 - $p$} aus mehreren tatsächlichen Integritäten gebildet, z.B. durch Summation oder Multiplikation derselben oder durch eine mathematische Formel, in der die jeweils relevanten tatsächlichen Integritäten miteinander verrechnet werden.

Mit dem erfindungsgemäßen Verfahren wird dadurch aus den Messergebnissen $z_k$, den Unsicherheiten oder Mess-Genauigkeiten $\Delta z_k$ und den Abweichungs-Wahrscheinlichkeiten oder Sensor-Integritätsrisiken $p_k$ ein möglichst kleiner Bereich $X_0$ von $x$-Werten bestimmt, der den unbekannten Parameter $x_0$ mit einer vorgegebenen oder geforderten Mindest-Integrität oder Mindest-Wahrscheinlichkeit {1 - $p_0$} enthält. Der gesuchte Bereich $X_0$ ist dann jene Menge von x-Werten, die in mindestens

$$\{n - m\}$$

Bereichen $X_k$ gleichzeitig enthalten sind. Erfindungsgemäß wird also die kleinste Zahl m ermittelt, für die noch die vorgenannte Ungleichung erfüllt ist. Die Lösung der Ungleichung mit Randbedingung erfolgt z.B. durch das Einsetzen von Werten $m$ und Durchführung eines Vergleichs von rechter und linker Seite der Ungleichung und Inkrementieren des Werteeinsatzes, bis die Ungleichung nicht mehr erfüllt ist.

Der Wert für n ist die Zahl der Messungen je Messreihe. Diese Zahl kann vorbestimmt oder festgelegt sein und hängt vom Anwendungsfall ab.

In dem konkret beschriebenen Anwendungsfall bedeutet die Zahl $m$ eine maximal zulässige Anzahl von Messfehlern, die mit der geforderten Integrität $\{1 - p_0\}$ verträglich ist.

Das beschriebene Verfahren ist auch auf alle Fälle anwendbar, in denen die Wahrscheinlichkeiten $p_k$ für das Auftreten von Abweichungen innerhalb einer Messreihe unterschiedlich sind. Hierfür wird die Größe $p^j$ und die Größe $(1 - p)^{n-j}$ durch ein Produkt von mehreren einzelnen Wahrscheinlichkeiten $p_k$ bzw. Integritäten $(1-p_k)$ gebildet.

Das beschriebene Verfahren ist auch auf Fälle anwendbar, in denen das Auftreten der Abweichungen korreliert ist.

Aus jeder der n Messungen der Mess-Reihe wird ein Bereich für die Messgröße $x_0$ ermittelt, so dass die von der zumindest einen Mess-Einrichtung ermittelte Mess-Größe $z_k$ der Mess-Gleichung mit der vorgegebenen Sensor-Integrität genügt, d.h. für die Mess-Gleichungs-Beziehung $z(t_k, x_0) \in [z_k - \Delta z_k, z_k + \Delta z_k]$ erfüllt ist.

In einem weiteren erfindungsgemäßen Schritt wird aus der Anzahl der vorbestimmten Messungen n und der maximalen Anzahl der zulässigen Messfehler m eine Genauigkeit bzw. ein Genauigkeitsbereich ermittelt, der bei der Anzahl von n Messungen mittels der zumindest einen jeweiligen Sensor-Einrichtung mit der geforderten Mindest-Integrität verträglich ist.

Erfindungsgemäß kann diese Genauigkeit bzw. dieser Genauigkeitsbereich aus der Differenz der vorbestimmten Anzahl von Messungen n und der Anzahl der höchstens zulässigen Messfehler m abgeleitet werden. Insbesondere kann dabei der Ausdruck

$$\{ n - m \}$$

zur Ermittlung der Genauigkeit der Messwerte verwendet werden.

Erfindungsgemäß wird also zumindest eine Messreihe mit jeweils einer Anzahl n von Messungen $z_k$ mittels zumindest einer Sensor-Einrichtung mit jeweils einer vorgegebenen Messgenauigkeit $\Delta z_k$ und eine auf diese bezogene, vorgegebene tatsächliche Sensor-Integrität $\{1- p_k\}$ ermittelt. Danach erfolgt einer Ermittlung einer Anzahl m von Messfehlern in Abhängigkeit der tatsächlichen Sensor- Integritäten $\{1- p_k\}$, in Abhängigkeit von der Anzahl n von Messungen und in Abhängigkeit von einer geforderten Mindest-Integrität $\{1- p_0\}$.

Für jede Messung der Messreihe wird ein Bereich $(X_k)$ als Mess-Ungenauigkeit und ausgehend von den Mess-Ungenauigkeitsbereichen $(X_1, ..., X_n)$ und der Anzahl $(m)$ von Messfehlern ein Genauigkeitsbereich $(X_0)$ für die zu ermittelnde Mess-Größe $(x_0)$ ermittelt, so dass der Genauigkeitsbereich $(X_0)$ die wahre Mess-Größe $(x_0)$ mit der vorgegebenen M indest-Integrität $\{1 - p_0\}$ enthält.

Anschließend erfolgt eine Zuordnung des ermittelten Genauigkeitsbereichs zu einem Genauigkeitsmaß.

In einer Funktion zum Fehler-Monitoring wird die ermittelte Genauigkeit der Messgröße mit einem vorgegebenen Schwellwert oder Sollwert für diese Genauigkeit verglichen. Falls die ermittelte Genauigkeit der Messgröße den vorgegebenen Schwellwert oder Sollwert nicht erreicht d.h. je nach Anwendungsfall über- oder unterschreitet, wird eine Sensordaten-Abweichung an eine Systemsteuerung, die auch Bestandteil der Sensor-Einrichtung sein kann, oder eine Benutzer-Oberfläche weitergegeben. Es ist eine Funktion des dynamischen Systems vorgesehen, die diese Abweichung je nach Anwendungsfall, verarbeitet, wobei das Auftreten der Abweichung ummittelbar oder mittelbar, zu System-Konsequenzen führen kann. Eine mittelbare Konsequenz kann dabei darin liegen, dass das Nicht-Erreichen des Schwellwert oder Sollwertes z.B. erst im Zusammenhang mit dem weiteren Auftreten des Nicht-Erreichens des Schwellwertes oder Sollwertes oder im Zusammenhang mit weiteren Fehlern derselben oder einer weiteren Sensor-Einrichtung oder eines weiteren Bestandteil des dynamischen Systems, zu System-Konsequenzen führt. Die System-Konsequenz kann in der Abschaltung des Systems oder in dem Übergehen in eine andere Betriebsart liegen.

Bei dem Vorliegen von Sensorwerten verschiedener Sensor-Einrichtungen oder von verschiedenartigen Sensorwerten innerhalb derselben Sensor-Einrichtung können diese Sensorwerte zusammen mit der erfindungsgemäß ermittelten Genauigkeit und der Mindestintegrität für den jeweiligen Sensorwert bzw. die Sensorwerte in einem Schätzfilter und insbesondere einem Kalman-Filter zu einem Sensorwert mit einer Genauigkeit und/oder Integrität fusioniert werden. Die voranstehend beschriebene Funktion zum Fehler-Monitoring kann diesem Kalman-Filter auch nachgeschaltet sein und die Abweichung aufgrund der mit dem Filter ermittelten Integrität ermittelt werden. Sie kann auch als zusätzlich zu der einem Filter vorgeschalteten Monitoring-Funktion dem Filter nachgeschaltet sein.

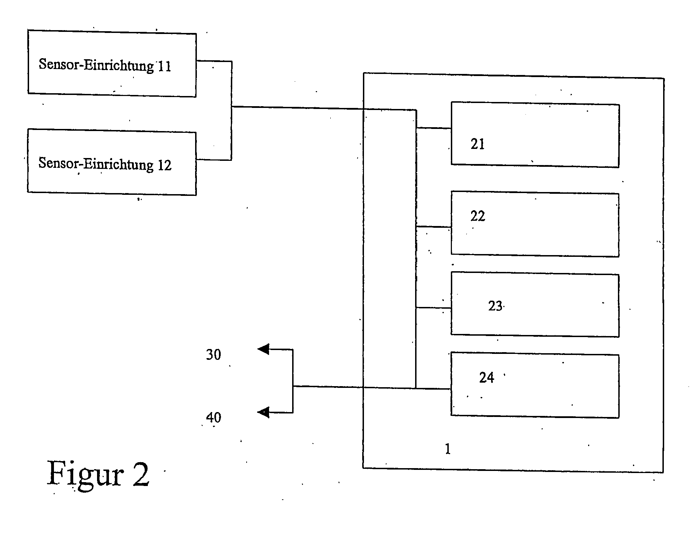

Die erfindungsgemäße Fehler-Erkennungsfunktion oder Fehler-Erkennungseinrichtung 1 steht in Verbindung mit zumindest einer ersten Sensor-Einrichtung 11. Es können der Fehler-Erkennungseinrichtung 1 auch weitere Sensor-Einrichtungen zugeordnet sein.In der Figur 2 ist eine spezielle Ausführungsform der Erfindung mit einer weiteren Sensor-Einrichtung 12, also mit insgesamt zwei Sensor-Einrichtungen dargestellt. Die Fehler-Erkennungseinrichtung 1 umfasst eine Einrichtung bzw. Funktion zur Fehler-Integritätsbestimmung 21 und eine Einrichtung bzw. Funktion zum Fehler-Monitoring 22. Letzteres ermittelt eine den mit der zumindest einen Sensor-Einrichtung ermittelten Sensorwerten zuordbare Integrität, die weiteren Systemfunktionen des dynamischen Systems, z.b. einer Benutzer-Oefläche 30 oder einer System-Steuereinrichtung 40 zuführbar ist.

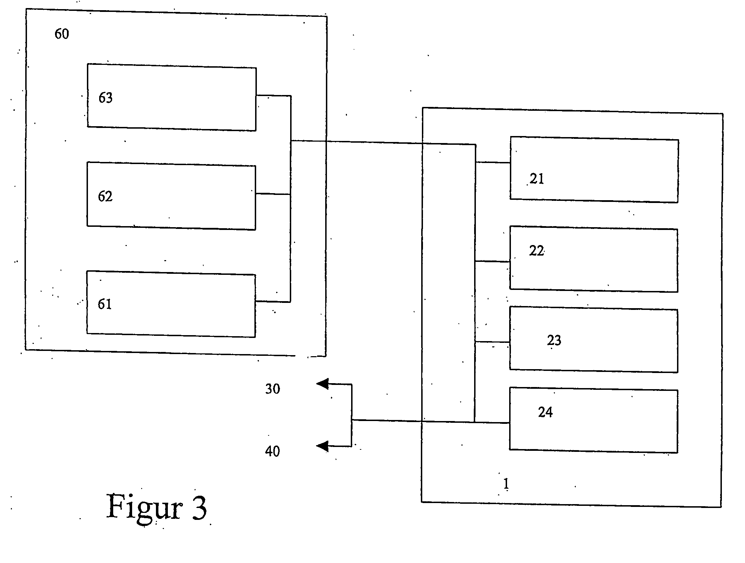

Im folgenden wird eine spezielle Anwendung des erfindungsgemäßen Verfahrens bzw. der erfindungsgemäßen Vorrichtung auf die Navigationseinrichtung eines Flugzeugs beschrieben. Dabei ist ein Sensor-System 60 vorgesehen, das als erste Sensor-Einrichtung eine Trägheitssensor-Einrichtung 61 und eine zweite Sensor-Einrichtung 62 umfasst, die mit einer digitalen Geländedatenbank 63 in Verbindung steht. Die zweite Sensor-Einrichtung 62 ist dabei ein Sensor, mit dem die Ermittlung der momentanen Position des Flugzeugs bezüglich der digitalen Geländedaten oder bezüglich des wahren Geländes möglich ist und kann dabei ein Radarhöhenmesser, ein Laserhöhen messer oder ein Sensor zum Empfang von Funksignalen oder Satellitendaten sein. Diesem Sensor-System 60 kann die erfindungsgemäße Fehlererkennungs-Einrichtung 1 nachgeschaltet sein (Fig. 3). Die erfindungsgemäße Fehlererkennungs-Einrichtung 1 kann alternativ auch Bestandteil des Sensor-Systems 1 sein.

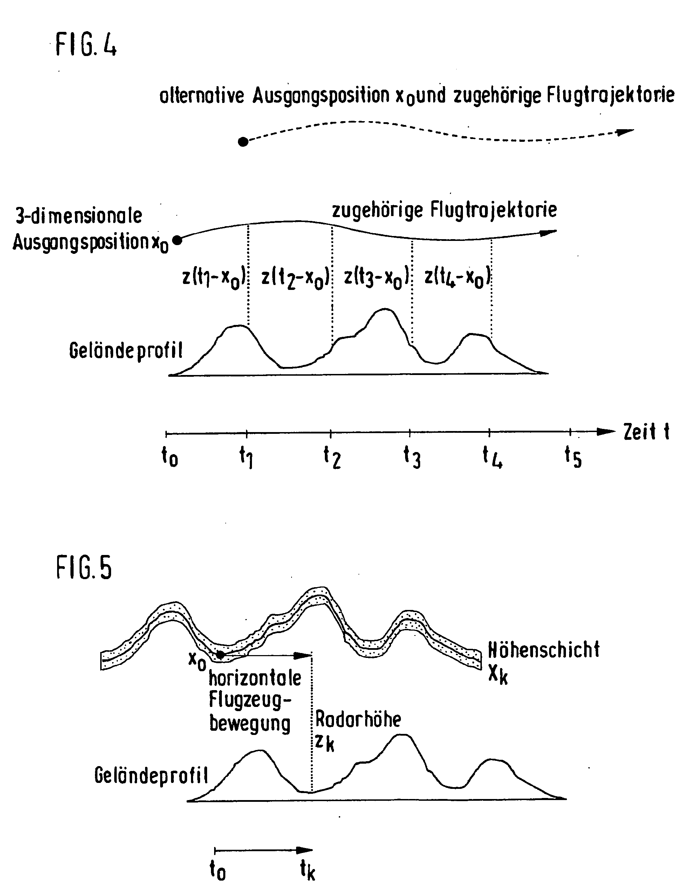

Die Trägheitssensor-Einrichtung 61 liefert Messwerte für momentane Geschwindigkeitsvektoren und die zweite Sensor-Einrichtung 62 liefert einen Höhenverlauf über dem digitalen Gelände. Dieser Höhenverlauf ist jedoch, da der Ausgangspunkt der Messwerte aus der Trägheitssensor-Einrichtung 61 nicht genau bekannt ist, versetzt zur tatsächlichen Kontur des überflogenen Geländes. Weiterhin können Ungenauigkeiten der Geländedaten und der Sensoren selbst, z.B. in den Trägheits-Sensoren oder dem Radarhöhenmesser angenommen werden. Außerdem können Fehler angenommen werden in den Verfahren, mit denen sich aus den eigentlichen Sensorwerten, z.B. elektrische Werte der Intertialsensoren, geeignete Rechengrößen für die Navigation ableiten. Durch derartige Fehler kann sich der Höhenverlauf zu einer Höhenschicht verbreitern (Figur 5).

Das in diesem Anwendungsfall einsetzbare Verfahren ist vorzugsweise wie folgt:

Das erfindungsgemäße Geländedatenbankgestützte Navigationsverfahren ermittelt einen multi-dimensionalen Parameter $x_0$ und verwendet dabei insbesondere eine Größe $z(t,x_0)$, die von einem Parameter $t$ und dem weiteren multi-dimensionalen Parameter $x_0$ abhängt. In einer bevorzugten Ausführungsform der Erfindung stehen der Parameter $t$ für die Zeit und der multi-dimensionale Parameter $x_0$ für die 3-dimensionale Position eines Flugzeugs zur Zeit $t_0$ (Ausgangsposition). Die Größe $z(t,x_0)$ steht für die Höhe des Flugzeugs über Grund zur Zeit $t$.

In dem besonderen Anwendungsfall der Verwendung einer digitalen Geländedatenbank als Navigationshilfe erfolgt die Ermittlung der dreidimensionalen Position durch eine Ermittlung der momentanen Position des Flugzeugs bezüglich des wahren Geländes oder bezüglich des digitalen Geländes der Geländedatenbank. Diese Position des Flugzeugs bezüglich des digitalen Geländes wird fusioniert mit den Positions-Informationen aus der Trägheitssensor-Einrichtung 61. Die zu bestimmende Höhe ist die Höhe über der realen Geländehöhe bzw. die Höhe über Grund.

In dem Fall der Bildung des Sensor-Systems 60 aus einer Trägheitssensor-Einrichtung 61, einem Höhenmesser 62, der insbesondere ein Rada rhöhenmesser oder ein Laserhöhenmesser sein kann, und einer digitalen Geländedatenbank 63 stehen der Fehlererkennungs-Einrichtung 21 als Eingangsgrößen aus dem Sensor-System 60 zur Verfügung:

- digitale Geländedaten aus der Geländedatenbank 63 mit einer Daten-Bereitstellungs- und Daten-Such-Funktion,

- Daten für die Höhe über Grund aus zumindest einem Höhen-Sensor zur Ermittlung der Kontur der Geländeoberfläche unter der vom Flugzeug geflogenen Flugbahn,

- die mittels der Trägheitssensor-Einrichtung 61 gemessene Beschleunigungen des Flugzeugs, die z.B. in der Trägheitssensor-Einrichtung 61 zu einer dreidimensionalen Geschwindigkeit aufintegriert werden, so dass insbesondere die Relativbewegung des Flugzeugs zu einer Ausgangsposition zur Verfügung gestellt wird.

Die von der Trägheitssensor-Einrichtung 61 ermittelten Daten, also die momentanen Geschwindigkeitsvektoren oder auch der Verlauf der bisher geflogenen Flugbahn, werden also ohne genauen Ausgangspunkt ermittelt. Eine beispielsweise Darstellung einer Messreihe in Form eines Verlaufs einer bisher geflogenen Flugbahn ist in der Figur 3 gegeben. Die gleichzeitig oder in einem parallelen Prozess von der weiteren Sensor-Einrichtung 62 bzw. dem zumindest einen Höhen-Sensor ermittelte Kontur der Geländeoberfläche unter der vom Flugzeug geflogenen Flugbahn kann daher nur mit einer verhältnismäßig großen Unsicherheit der Geländeinformation aufgrund der digitalen Geländedaten räumlich zugeordnet werden. Diese Zuordnung und damit die Positions- und Höhen-Bestimmung unter Gewährleistung einer vorbestimmten Mindest-Integrität oder Genauigkeit erfolgt erfindungsgemäß wie folgt:

Erklärend wird hinzugefügt, dass die Genauigkeit und die Integrität im allgemeinen nicht gleichzeitig vorbestimmt werden können. In dem Navigationsverfahren wird die Mindest-Integrität vorbestimmt und die zugehörige Genauigkeit bzw. der zugehörige Genauigkeitsbereich ergibt sich dann aus dem Verfahren.

Durch den Höhenmesser wird ein Verlauf der Höhe über Grund, d.h. die Höhe über dem wahren Gelände, im Bereich unterhalb der geflogenen Flugbahn ermittelt. Ein Beispiel für eine Messreihe in Form eines ermittelten Höhenverlaufs ist in der Figur 4 gezeigt. Eine Zuordnung der aus den Messungen verschiedener Sensoren ermittelten Oberflächen-Kontur des jeweils abgeflogenen Geländes auf das digitale Gelände der Geländedatenbank würde zu einer Bestimmung der genauen Position des Flugzeugs bezogen auf den Zeitpunkt der jeweiligen Messreihe führen. Die Genauigkeit einer solchen Positionsbestimmung ist dabei von der Genauigkeit der Sensoren und der Geländedatenbank vorgegeben.

Eine solche Reihe von Messungen liegt für mehrere Zeitpunke vor: es kann für jeden Mess-Zeitpunkt eine Reihe einer vorbestimmten oder situationsabhängigen Anzahl n von Messungen oder ein Satz von jeweils n Messungen ermittelt werden.

Da der Ausgangspunkt der von der Trägheitssensor-Einrichtung 61 ermittelten Messreihe ungenau ode r unbestimmt ist und da sämtliche Messungen mit Fehlern, die gerätetechnisch oder verfahrenstechnisch bedingt sein können, behaftet sind, werden erfindungsgemäß eine Reihe von Messungen verschiedener Sensoren miteinander fusioniert. Um eine solche Fusion für sicherheitskritische Systeme anwenden zu können, wird erfindungsgemäß auch eine Genauigkeit bzw. ein Genauigkeitsbereich, der mit der vorbestimmten Mindestintegrität verträglich ist, für jeden ermittelten Wert angegeben, so dass bei einem Nicht-Erreichen eine Soll-Wertes systemtechnische Konsequenzen gezogen werden können.

Ist die Relativbewegung des Flugzeugs in der Zeit von $t_0$ bis $t$ z.B. aus der Trägheitsanlage bekannt, so lässt sich für jede Ausgangsposition $x_0$ die Flugtrajektorie zu den Zeiten $t > t_0$ rekonstruieren.

Die Größe $z(t,x_0)$ wird nun bei festem aber unbekanntem Parameter $x_0$ zu verschiedenen Zeiten $t_k$, $k = 1 .. n$ gemessen und ergibt die Messwerte $z_k$.

In der o.g. Navigationsanwendung ist die Position $x_0$ des Flugzeugs zur Zeit $t_0$ unbekannt.

Zu den Zeiten $t_k$, $k = 1 .. n$ wird jeweils die Höhe über Grund $z_k$ z.B. mit Hilfe eines Höhenmessers und insbesondere eines Radar-Höhenmessers gemessen.

Das Höhenprofil des überflogenen Gebietes ist in einer 3-dimensionalen Geländedatenbank abgelegt. In einem weitere Schritt wird entlang der Flugtrajektorie ein Schnitt entlang der geflogenen Flugbahn durch die 3-dimensionale Geländedatenbank gelegt, die das überflogene Geländeprofil zeigt.

Daraus wird die Funktion $z(t,x_0)$, d.h. die Höhe über Grund, ermittelt. Dazu wird die Differenz zwischen dem Höhenprofil der Flugtrajektorie und dem Geländeschnitt gebildet. Diese Funktion ist für jede Ausgangsposition $x_0$ konstruierbar und damit bekannt.

Die Messwerte $z_k$ weisen jeweils eine Unsicherheit $\Delta z_k$ relativ zum wahren Wert $z(t_k,x_0)$ auf, d.h. die Messwerte liegen mit einer Wahrscheinlichkeit $1 - p_k$ innerhalb des Bereiches

$$[z(t_k,x_0) - \Delta z_k\, ,\ z(t_k,x_0) + \Delta z_k]\ .$$

und mit der Wahrscheinlichkeit $p_k$ außerhalb dieses Bereichs. Dabei wird an dieser Stelle keine detaillierte Kenntnis der Wahrscheinlichkeitsverteilung vorausgesetzt. Der Unsicherheits bereich kann auch asymmetrisch sein.

Den Fall, dass ein Messwert $z_k$ außerhalb des Bereichs $[z(t_k,x_0) - \Delta z_k,\ z(t_k,x_0) + Az_k]$ liegt, bezeichnet man als Abweichung oder Failure.

Das Auftreten von Abweichungen oder Failures zu den Zeiten $t_k$ kann unkorreliert sein, oder es kann in spezifizierter Weise zeitlich korreliert sein.

In der erfindungsgemäßen Navigationsanwendung können Abweichungen oder Failures von den Radarmessungen herrühren oder durch eine fehlerhafte Geländedatenbank verursacht sein.

Die vorgegebene Mindestwahrscheinlichkeit oder Mindestintegrität $\{1 - p_0\}$ wird durch das erfindungsgemäße Verfahren gewährleistet, und zwar unabhängig davon, welche Messergebnisse im Einzelfall auftreten. Im Fall der o.g. Navigationsanwendung liefert das Verfahren also einen möglichst genauen Raumbereich $X_0$ für die unbekannte Position $x_0$ des Flugzeugs zur Zeit $t_0$, und dies mit einer vorgegebenen Integrität von mindestens $\{1 - p_0\}$.

In dem Verfahren wird für jeden Zeitpunkt $t_k$, $k = 1 .. n$, anhand des vorliegenden Messergebnisses $z_k$ ein Bereich $X_k$ von x-Werten ermittelt. Und zwar umfasst $X_k$ alle jene Parameter x für welche kein Failure aufträte, d.h. für die $z(t_k,x) \in [z_k - \Delta z_k, z_k + \Delta z_k]$ ist.

In der Navigationsanwendung ist $X_k$ jener 3-dimensionale räumliche Bereich, der für die Ausgangsposition $x_0$ in Frage kommt, ohne dass bei der k-ten Radarmessung ein Failure auftritt. Dieser Bereich ist eine um die Höhe über Grund $z_k$ und um die Flugzeugbewegung parallel zu m Geländeprofil verschobene Höhenschicht. In Figur 5 ist angenommen, dass sich das Flugzeug in der Zeit von $t_0$ bis $t_k$ horizontal bewegt und zur Zeit $t_k$ die Radarhöhe $z_k$ misst.

Eine mögliche Ausgangsposition ist mit $x_0$ gekennzeichnet. Die Menge aller möglichen Ausgangspositione n ist die Höhenschicht $X_k$, deren halbe Dicke $\Delta z_k$ ist.

Gemäß der Erfindung wird aus den n Bereichen $X_k$, $k = 1 .. n$, ein Bereich $X_0$ mit den obengenannten Eigenschaften zu konstruiert. Sind alle Failure-Wahrscheinlichkeiten $p_k$ identisch, d.h. $p_k = p$ für alle $k = 1 .. n$, und ist das Auftreten der Failures unkorreliert, so bestimmt man gemäß dem Verfahren die kleinste Zahl $m$, $0 \le m \le n$, für die

$$\sum_{j=m+1}^{n} \frac{n!}{j!(n-j)!} p^{j}(1-p)^{n-j} < p_0$$

ist.

Der Wert für $n$ ist die Zahl der Messungen je Messreihe. Diese Zahl kann vorbestimmt oder festgelegt sein und hängt vom Anwendungsfall ab. In Bezug auf die Messreihe eines Radar-Höhen messers ist $n$ die Zahl der Radar-Höhen messungen, die für eine Messreihe verwendet wird. In einer alternativen Ausführungsform wird die Zahl $n$ dynamisch festgelegt, z.B. in Abhängigkeit von der Flug-Geschwindigkeit oder von dem Geländeverlauf wie z.B. dessen Rauhigkeit.

In der Navigationsanwendung ist $X_0$ jener Bereich, in dem sich mindestens $\{n - m\}$ Höhenschichten überlappen bzw. schneiden. Das bedeutet:

in $\{n-m\}$ Höhenschichten muss die unbekannte Ausgangsposition $X_0$ des Flugzeugs gleichzeitig enthalten sein, damit der entsprechende Sensor-Wert die gewünschte Integrität dieser zu ermittelnden Ausgangsposition erreicht oder gewährleistet. Bei der Verwendung einer Trägheits-Sensorik 21 mit einer unbestimmten Ausgangsposition $x_0$ der Messung wird also ein Bereich $X_0$ ermittelt, in dem die Ausgangsposition $x_0$ mit vorgegebener Mindestwahrscheinlichkeit enthalten ist.

Der gesuchte Bereich $X_0$ ist dann jene Menge von $x$-Werten, die in mindestens $\{n - m\}$ Bereichen $X_k$ gleichzeitig enthalten sind. (Wurde schon auf Seite 12 gesagt)

Für den Fall, dass mehrere Sensorwerte mit zugehörigen Integritäten ermittelt werden, also z.B. wenn mehrere Sensor-Einrichtungen vorgesehen sind, werden die I n-tegritäten und die zugehörigen Reihen von Messwerten von zumindest zwei Sensor-Einrichtungen vorzugsweise einem Schätzfilter, der vorzugsweise ein Kalmanfilter ist, zugeführt, der aus diesen Werten einen Messwert und eine Genauigkeit ermittelt.

Der von dem Filter ermittelte Wert und/oder die Genauigkeit kann in einer VergleichsEinrichtung 24 mit einem Schwellwert verglichen werden. Bei Erreichen oder Über- oder Unterschreiten des Schwellwertes abhängig vom Anwendungsfall kann ein Warnungssignal an eine benachbarte System-Einrichtung bzw. System-Funktion wie z.B. einer Benutzeroberfläche, das z.B. die Anzeige-Einrichtung in einem Cockpit sein kann, ausgegeben werden. Auch kann vorgesehen sein, dass aufgrund eines solchen Warnsignals die Betriebsart einer Flugsteuerungs-Einrichtung als benachbarte System-Einrichtung gewählt oder geändert werden. Auch kann dann vorgesehen sein, die die Abweichung verusachende Sensor-Einrichtung abzuschalten und in einer anderen System-Betriebsart gegebenenfalls unter Einbezug eines weiteren Sensors weiter zu verfahren.

## Patentansprüche

1. Zur Implementierung in eine Datenverarbeitungseinrichtung vorgesehenes Verfahren zur Überwachung einer zulässigen Integrität einer Messgröße eines dynamischen Systems mit den folgenden Schritten:

   - Ermittlung zumindest einer Mess-Reihe mit jeweils einer Anzahl ($n$) von Messungen ($z_k$) mittels zumindest einer Sensor-Einrichtung mit jeweils einer vorgegebenen Mes sgenauigkeit ($\Delta z_k$) und einer auf diese bezogenen, vorgegebenen tatsächlichen Sensor-Integrität ($\{1- p_k\}$),
   - Ermittlung einer Anzahl ($m$) von Messfehlern in Abhängigkeit der tatsächlichen Sensor- Integritäten ($\{1- p_k\}$), in Abhängigkeit von der Anzahl ($n$) von Messungen und in Abhängigkeit von einer Mindest-Integrität ($\{1- p_0\}$),
   - Ermittlung für jede Messung der Mess-Reihe einen Bereich ($X_k$) als Mess-Ungenauigkeit und Ermittlung ausgehend von den Mess-Ungenauigkeitsbereichen ($X_1$ , ..., $X_n$) und der Anzahl ($m$) von Messfehlern eines Genauigkeitsbereichs ($X_0$) für die zu ermittelnde Mess-Größe ($x_0$), so dass der Genauigkeitsbereichs ($X_0$) die wahre Mess-Größe ($x_0$) mit der vorgegebenen Mindest-Integrität $\{1 - p_0\}$ enthält,
   - Zuordnung des ermittelten Genauigkeitsbereichs zu einem Genauigkeitsmaß
   - Vergleich des ermittelten Genauigkeitsmaßes mit einem Schwellwert,
   - Ausgabe einer Warnung, sobald ein Sollwert erreicht, unter- oder überschritten ist.

2. Zur Implementierung in eine Datenverarbeitungseinrichtung vorgesehenes Verfahren zur Überwachung einer zulässigen Integrität einer Messgröße eines dynamischen Systems, **dadurch gekennzeichnet, dass** die Ermittlung einer Anzahl ($m$) von Messfehlern mittels einer Vorschrift

$$\sum_{j=m+1}^{n} \frac{n!}{j!(n-j)!} p^{j}(1-p)^{n-j} < p_0$$

erfolgt, wobei $\{1- p\} = \{1- p_1\}$, ..., $\{1- p_n\}$ eine für die Mess-Reihe einheitliche Sensor-Integrität bezeichnet.

**Claims**

1. Method provided for implementation in a data-processing device for monitoring a permissible integrity of a measured variable of a dynamic system having the following steps:

   - determination of at least one series of measurements with a respective number (n) of measurements ($z_k$) by means of at least one sensor device with, in each case, a predetermined measuring accuracy ($\Delta z_k$) and a predetermined actual sensor integrity ($\{1\text{-}p_k\}$) relative to the latter,
   - determination of a number (m) of measuring errors as a function of the actual sensor integrities ($\{1\text{-}p_k\}$), as a function of the number (n) of measurements and as a function of a minimum integrity ($\{1\text{-}p_0\}$),
   - determination for each measurement of the series of measurements [*lacuna*] a range ($X_k$) as a measuring inaccuracy and determination, starting from the measuring-inaccuracy ranges ($X_1, ..., X_n$) and the number (m) of measuring errors, of an accuracy range ($X_0$) for the measured variable ($x_0$) that is to be determined so that the accuracy range ($X_0$) contains the true measured variable ($x_0$) with the predetermined minimum integrity $\{1\text{-}p_o\}$,
   - association of the determined accuracy range with an accuracy scale
   - comparison of the determined accuracy scale with a threshold value,
   - issue of a warning as soon as a desired value is reached, undershot or exceeded.

2. Method provided for implementation in a data-processing device for monitoring a permissible integrity of a measured variable of a dynamic system, **characterised in that** the determination of a number (m) of measuring errors is effected by means of a specification

$$\sum_{j=m+1}^{n} \frac{n!}{j!(n-j)!} p^j (1-p)^{n-j} < p_0$$

where $\{1\text{-}p\} = \{1\text{-}p_1\}, ..., \{1\text{-}p_n\}$ denotes a sensor integrity that is uniform for the series of measurements.

**Revendications**

1. Procédé d'implémentation d'une installation de traitement de données pour surveiller l'intégrité autorisée d'une grandeur de mesure d'un système dynamique comprenant les étapes suivantes :

   - détermination d'au moins une série de mesures composée d'un nombre (n) de mesures ($z_k$) à l'aide d'au moins une installation de capteur avec chaque fois une précision de mesure ($\Delta z_k$) prédéfinie et une intégrité de capteur effective, prédéfinie ($\{1\text{-}p_k\}$) rapportée à cette précision de mesure,
   - détermination d'un nombre (m) d'erreurs de mesure en fonction des intégrités effectives de capteur ($\{1\text{-}p_k\}$), en fonction du nombre (n) de mesures et en fonction d'une intégrité minimale ($\{1\text{-}p_0\}$),
   - détermination pour chaque mesure de la série de mesures d'une zone ($X_k$) comme imprécision de mesure et détermination à partir des zones d'imprécision de mesure ($X_1,...,X_n$) et du nombre (m) d'erreurs de mesure, d'une plage de précision ($X_0$) pour la grandeur de mesure ($x_0$) à déterminer de façon que la plage de précision ($X_0$) contienne la véritable grandeur de mesure ($x_0$) avec une intégrité minimale $\{1\text{-}p_0\}$, prédéfinie,
   - association de la plage de mesure obtenue à une mesure de précision,
   - comparaison de la mesure de précision obtenue à une valeur de seuil,
   - émission d'un avertissement dès qu'une valeur de seuil est atteinte ou dépassée vers le haut ou vers le bas.

2. Procédé de surveillance de l'intégrité autorisée d'une grandeur de mesure d'un système dynamique pour être implémenté dans une installation de traitement de données,
   **caractérisé en ce que**
   la détermination d'un nombre (m) d'erreurs de mesure se fait selon la règle :

$$\sum_{j=m+1}^{n} \frac{n!}{j!(n-j)!} p^j (1-p)^{n-j} < p_0$$

dans laquelle, on a : $\{1\text{-}p\} = \{1\text{-}p_1\}, ..., \{1\text{-}p_n\}$, pour une série de mesures unitaires caractérisant l'intégrité du capteur.

Figur 1

Figur 2

EP 1 771 775 B1

Figur 3

## FIG. 4

alternative Ausgangsposition $x_0$ und zugehörige Flugtrajektorie

3-dimensionale
Ausgangsposition $x_0$

zugehörige Flugtrajektorie

$z(t_1-x_0)$    $z(t_2-x_0)$    $z(t_3-x_0)$    $z(t_4-x_0)$

Geländeprofil

Zeit $t$

$t_0$    $t_1$    $t_2$    $t_3$    $t_4$    $t_5$

## FIG. 5

$x_0$
horizontale
Flugzeugbewegung

Höhenschicht
$X_k$

Radarhöhe
$z_k$

Geländeprofil

$t_0$    $t_k$

Höhenschicht $X_2$

Höhenschicht $X_1$

$X_0$

Radarhöhe $Z_1$

Radarhöhe $Z_2$

horizontale Flugzeugbewegung

Geländeprofil

$t_0$     $t_1$     $t_2$

FIG. 6

**EP 1 771 775 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 5680409 A